# EUROPÄISCHE PATENTANMELDUNG

(11) **EP 4 797 739 A1**
(43) Veröffentlichungstag der Anmeldung: **26.08.2026**
(21) Anmeldenummer: 26156862.0
(22) Anmeldetag: 06.02.2026
(51) Int. Cl.: H04W 4/46, H04W 88/02, H04W 4/38, H04W 84/00, H04W 84/02, H04W 12/03, H01R 24/00, H01B 9/00, H01B 11/00, H01Q 1/00, H01Q 1/12, H01Q 1/27, H01Q 1/32, H01Q 3/00, H01R 4/00, H05K 5/00, H05K 5/02, H05K 5/04

(54) **KOMMUNIKATIONSVORRICHTUNG, FAHRZEUGVERBUND SOWIE SYSTEM UND VERFAHREN ZUR DRAHTLOSEN DATENÜBERTRAGUNG**

(30) Priorität: 25.02.2025 DE 102025106978
(71) Anmelder: Scheuerle Fahrzeugfabrik GmbH, 74629 Pfedelbach (DE)
(72) Erfinder: Gschwend, Michael, 88400 Biberach (DE); Harrer, Stefan, 89340 Riedheim (DE)
(74) Vertreter: Ullrich & Naumann PartG mbB

(57) **Zusammenfassung**

Eine Kommunikationsvorrichtung (4, 4') für ein Transportfahrzeug (2, 2'), insbesondere für ein modulares Transportfahrzeug (2, 2'), vorzugsweise ein selbstangetriebenes modulares Transportfahrzeug (SPMT) (2, 2'), umfassend eine mit mindestens einer Antenne (6, 6') verbundene Kommunikationseinheit (5, 5'), wobei die Kommunikationseinheit (5, 5') dazu ausgebildet ist, mittels der Antenne (6, 6') eine drahtlose Datenverbindung (7), vorzugsweise über ein lokales Funknetz, mit einer weiteren Kommunikationsvorrichtung (4, 4') eines weiteren Transportfahrzeugs (2, 2') herzustellen. Des Weiteren sind ein Fahrzeugverbund (1) sowie ein System (3) und Verfahren zur drahtlosen Datenübertragung zwischen mindestens zwei Transportfahrzeugen (2, 2') beschrieben.

## Beschreibung

Die Erfindung betrifft eine Kommunikationsvorrichtung für ein Transportfahrzeug, insbesondere für ein modulares Transportfahrzeug.

Des Weiteren betrifft die Erfindung ein System zur drahtlosen Datenübertragung zwischen mindestens zwei Transportfahrzeugen.

Weiterhin betrifft die Erfindung einen Fahrzeugverbund mit mindestens zwei Transportfahrzeugen, insbesondere modularen Transportfahrzeugen.

Die Erfindung betrifft zusätzlich ein Verfahren zur drahtlosen Datenübertragung zwischen mindestens zwei Transportfahrzeugen, insbesondere modularen Transportfahrzeugen

Aus der Praxis sind Transportfahrzeuge, beispielsweise sog. selbstangetriebene Transportfahrzeuge und selbstangetriebene modulare Transportfahrzeuge ("Self-Propelled Modular Transporter" SPMT) vorbekannt, welche zum Transport von schweren Lasten genutzt werden, beispielsweise um Industrieanlagen, Schiffe, Schiffssektionen, Turbinen etc. zu transportieren. Entsprechende Transportfahrzeuge können ein Fahrwerk mit einer Ladefläche und hintereinander angeordneten Radanordnungen aufweisen.

Insbesondere bei dem Transport von ausladenden und/oder extrem schweren Transportgütern ist es notwendig, mehrere Transportfahrzeuge zu einem Fahrzeugverbund zu kuppeln, wobei eine solche Verbindung nicht zwangsweise mechanisch erfolgt. Wesentlich ist dabei jedoch, dass relevante Daten, beispielsweise betreffend die Geschwindigkeit, Lenkung etc., über eine Datenverbindung zwischen den einzelnen Fahrzeugen ausgetauscht werden. Hierzu ist es aus dem Stand der Technik bekannt, Datenkabel zwischen den Steuereinrichtungen der einzelnen Fahrzeuge anzuordnen, so dass die Fahrzeuge miteinander kommunizieren bzw. Daten austauschen können. Dabei ist problematischen, dass eine solche Verkabelung aufwendig zu verlegen ist und störend im Betrieb des Fahrzeugverbunds ist.

Der vorliegenden Erfindung liegt daher die Aufgabe zugrunde, eine Kommunikationsvorrichtung derart auszugestalten und weiterzubilden, dass mit geringem Aufwand eine zuverlässige Datenverbindung zwischen mindestens zwei Transportfahrzeugen möglich ist. Des Weiteren sollen ein System und ein Fahrzeugverbund umfassend eine solche Kommunikationsvorrichtung sowie ein Verfahren zur drahtlosen Datenübertragung zwischen mindestens zwei Transportfahrzeugen angegeben werden.

Erfindungsgemäß wird die voranstehende Aufgabe durch die Merkmale des Anspruches 1 gelöst. Damit ist eine Kommunikationsvorrichtung für ein Transportfahrzeug, insbesondere für ein modulares Transportfahrzeug, vorzugsweise ein selbstangetriebenes modulares Transportfahrzeug (SPMT), ein Industriehubtransporter (IHT) und/oder ein Schiffshubtransporter (SHT), beansprucht, umfassend eine mit mindestens einer Antenne verbundene Kommunikationseinheit, wobei die Kommunikationseinheit dazu ausgebildet ist, mittels der Antenne eine drahtlose Datenverbindung, vorzugsweise über ein lokales Funknetz, mit einer weiteren Kommunikationsvorrichtung eines weiteren Transportfahrzeugs herzustellen.

In Bezug auf das System wir die voranstehende Aufgabe durch die Merkmale von Anspruch 12 gelöst. Damit ist ein System zur drahtlosen Datenübertragung zwischen mindestens zwei Transportfahrzeugen, insbesondere modularen Transportfahrzeugen, vorzugsweise selbstangetriebenen modularen Transportfahrzeugen (SPMT), Industriehubtransportern (IHT) und/oder Schiffshubtransportern (SHT), beansprucht, umfassend mindestens zwei Kommunikationsvorrichtungen nach einem der Ansprüche 1 bis 11, wobei die Kommunikationsvorrichtungen dazu ausgebildet sind, Daten drahtlos miteinander auszutauschen.

In Bezug auf den Fahrzeugverbund wir die zugrundeliegende Aufgabe durch die Merkmale von Anspruch 13 gelöst. Damit ist ein Fahrzeugverbund mit mindestens zwei Transportfahrzeugen, insbesondere modularen Transportfahrzeugen, vorzugsweise selbstangetriebenen modularen Transportfahrzeugen (SPMT), Industriehubtransportern (IHT) und/oder Schiffshubtransportern (SHT), und einem System nach Anspruch 12 beansprucht.

In Bezug auf das Verfahren wird die zugrundeliegende Aufgabe durch die Merkmale von Anspruch 14 gelöst. Danach umfasst ein erfindungsgemäßes Verfahren zur drahtlosen Datenübertragung zwischen mindestens zwei Transportfahrzeugen, insbesondere modularen Transportfahrzeugen, vorzugsweise selbstangetriebenen modularen Transportfahrzeugen (SPMT), Industriehubtransportern (IHT) und/oder Schiffshubtransportern (SHT), mit einem System nach Anspruch 12, die folgenden Verfahrensschritte:
- Befestigen einer ersten Kommunikationseinheit an einem ersten Transportfahrzeug und Herstellen einer drahtgebundenen Datenverbindung sowie einer drahtgebundenen Stromverbindung zwischen der ersten Kommunikationseinheit und dem ersten Transportfahrzeug,
- Befestigen einer weiteren Kommunikationseinheit an einem weiteren Transportfahrzeug und Herstellen einer drahtgebundenen Datenverbindung sowie einer drahtgebundenen Stromverbindung zwischen der weiteren Kommunikationseinheit und dem weiteren Transportfahrzeug,
- Befestigen der Antenne der ersten Kommunikationseinheit an dem ersten Transportfahrzeug und befestigen der Antenne der weiteren Kommunikationseinheit an dem weiteren Transportfahrzeug derart, dass die erste Antenne und die zweite Antenne zueinander ausgerichtet sind, um eine drahtlose Datenverbindung zu ermöglichen.

In erfindungsgemäßer Weise ist erkannt worden, dass die zugrunde liegende Aufgabe in verblüffend einfacher Weise durch eine Kommunikationsvorrichtung gelöst werden kann, die eine Kommunikationseinheit und eine mit dieser verbundene Antenne aufweist. Eine solche Kommunikationseinheit kann an einem ersten Transportfahrzeug angeordnet werden und mittels der Antenne über eine drahtlose Datenverbindung mit einer weiteren Kommunikationseinheit kommunizieren bzw. Daten mit dieser austauschen. Somit ist es möglich, auf einfache Weise einen zuverlässigen Datenaustausch zwischen den Transportfahrzeugen zu ermöglichen, und zwar ohne die Verlegung einer Kabelverbindung.

Durch die erfindungsgemäße Lehre könnte eine drahtlose Kommunikation zum Zwecke der Synchronisation der Funktionen, beispielsweise anheben, absenken, lenken, anfahren, Geschwindigkeitskontrolle etc., mehrerer, vorzugsweise gekuppelter, insbesondere modularer, (Schwerlast-)Transportfahrzeuge eines Fahrzeugverbunds und/oder zum Zwecke der Koordination eines Fahrzeugverbunds mehrerer, vorzugsweise gekuppelter, insbesondere modularer, (Schwerlast-)Transportfahrzeuge ermöglicht sein. Mit anderen Worten kann durch die Anordnung mehrerer miteinander in Verbindung stehender Kommunikationsvorrichtungen, die Koordination einer entsprechenden Anzahl Transportfahrzeuge, vorzugsweise modulare Schwerlasttransportfahrzeuge und/oder Schwerlastmodule, die in einem Fahrzeugverbund zusammengeschlossen sind, durch die drahtlose Übertragung von Daten verwirklicht sein. Bei diesen ausgetauschten Daten kann es sich somit um Verbunddaten handeln, welche dazu notwendig sind, einen Fahrzeugverbund mit mindestens zwei Transportfahrzeugen in Bezug auf die Transportfahrzeugfunktionen zu synchronisieren bzw. den Fahrzeugverbund zu koordinieren.

Die Begriffe "angeordnet" und "befestigt" sind im Rahmen dieser Offenbarung, insbesondere in der Beschreibung und in den Ansprüchen, im weitesten Sinne zu verstehen. Beispielsweise könnten die Antenne und/oder die Kommunikationseinheit an dem Transportfahrzeug formschlüssig und/oder kraftschlüssig und/oder mittels magnetischer Kraft befestigt sein. Im einfachsten Fall könnten die Antenne und/oder die Kommunikationseinheit auf das Transportfahrzeug aufgestellt sein.

Das im Rahmen dieser Offenbarung, insbesondere in der Beschreibung und den Ansprüchen, beschriebene Transportfahrzeug könnte eine Nutzlast von mehreren Tonnen, beispielsweise eine Nutzlast von bis zu 50 Tonnen oder mehr, insbesondere eine Nutzlast bis zu 160 Tonnen oder mehr, vorzugsweise bis zu 330 Tonnen oder mehr, aufweisen. Somit kann das Transportfahrzeug für den Transport schwerer Transportgüter bzw. Lasten genutzt werden. Alternativ oder zusätzlich kann das im Rahmen dieser Offenbarung, insbesondere in der Beschreibung und den Ansprüchen, beschriebene Transportfahrzeug dazu ausgebildet sein, mit anderen Transportfahrzeugen, insbesondere hydraulisch, elektrisch und/oder mechanisch, zu einem Transportfahrzeugverbund gekuppelt zu werden, so dass es sich um ein modulares Transportsystem, insbesondere ein Schwerlastmodul, handeln kann. Dabei kann es sich bei den gekuppelten Transportfahrzeugen beispielsweise um selbstangetriebene modulare Transportfahrzeuge (SPMT), Industriehubtransporter (IHT) und/oder Schiffshubtransporter (SHT) handeln. Dabei müssen die Transportfahrzeuge nicht zu einem physischen Gesamtfahrzeug mechanisch gekuppelt sein (sog. "fester Verbund"), sondern können auch nicht mechanisch miteinander gekuppelte Transportfahrzeuge einen sog. "losen Verbund" bilden. Insbesondere kann bei einem losen Verbund die mechanische Verbindung der einzelnen Transportfahrzeuge, beispielsweise SPMTs, Industriehubtransporter (IHT) und/oder Schiffshubtransporter (SHT), über das Transportgut erfolgen.

Der im Rahmen dieser Offenbarung, insbesondere in der Beschreibung und den Ansprüchen, beschriebene Fahrzeugverbund könnte ein "fester" oder "loser" Verbund aus mehreren, mindestens zweier, Transportfahrzeugen und/oder Einheiten von Transportfahrzeugen sein, die in beliebiger Weise gekuppelt sind. Ein derartiger Fahrzeugverbund, vorzugsweise umfassend gekuppelte Schwerlastmodule, kann zum Transport schwerster Lasten, beispielsweise von Baumaschinen, Turmsegmenten, Raketen(teilen), Förderanlagen, Schiffen und/oder Industrieanlagen, verwendet werden. Vorzugsweise können einzelne oder sämtliche Transportfahrzeuge und/oder einzelne oder sämtliche Einheiten von Transportfahrzeugen eines Fahrzeugverbunds eine erfindungsgemäße Kommunikationsvorrichtung aufweisen. Somit kann durch den, insbesondere drahtlosen, Austausch von relevanten Daten die gemeinsame Bewegung der Transportfahrzeuge und/oder Einheiten des Fahrzeugverbunds mit oder ohne geladener (Schwerst-)Last koordiniert werden, vorzugsweise in Echtzeit. Weiterhin kann dadurch eine Synchronisation der Funktionen der Transportfahrzeuge bereitgestellt sein.

Es wird darauf hingewiesen, dass die erfindungsgemäße Kommunikationsvorrichtung verfahrensmäßig ausgeprägte Merkmale aufweisen kann. Diese in den abhängigen Ansprüchen, in der allgemeinen Beschreibung sowie in der Figurenbeschreibung offenbarten Merkmale und die damit erzielten Vorteile können ausdrücklich Teil des erfindungsgemäßen Verfahrens sein. Des Weiteren ist wesentlich, dass Anspruch 14 keine explizite Reihenfolge der enthaltenen Verfahrensschritte vorgibt, so dass die Schritte des erfindungsgemäßen Verfahrens in einer beliebigen Reihenfolge durchgeführt werden können.

Gemäß einer vorteilhaften Ausgestaltung kann die Kommunikationseinheit eine Elektronik mit integrierten oder angeschlossenen Ein-/Ausgangsbaugruppen zur Erfassung, Verarbeitung und Ausgabe der Steuersignale und ein Funkübertragungsmodul als verbindendes Element zwischen drahtgebundener und drahtloser Übertragung aufweisen. Zusätzlich könnten Bauteile zur Spannungsversorgung der Komponenten der Kommunikationseinheit verbaut sein. Weiterhin könnten ein oder mehrere Energiespeicher, insbesondere Batterien, zur Spannungsversorgung der Komponenten der Kommunikationseinheit verbaut sein.

In vorteilhafter Weise kann die Kommunikationseinheit mindestens ein Verbindungselement zur Herstellung einer lösbaren Verbindung mit dem Transportfahrzeug aufweisen. Dies hat den Vorteil, dass die Kommunikationseinheit unter Berücksichtigung der Position, wo sich das Transportfahrzeug in einem Fahrzeugverbund befindet, an der optimalen Stelle an dem Transportfahrzeug angeordnet werden kann. Dabei ist es denkbar, dass die Kommunikationseinheit an dem Transportfahrzeug, beispielsweise einem SPMT, oder an einer dem Transportfahrzeug zugeordneten Zusatzeinheit, beispielweise einer sog. Power Pack Unit (PPU), festlegbar ist. Im Konkreten könnte die Kommunikationseinheit einen Halter, insbesondere einen Haken, als Verbindungselement aufweisen, mit dem die Kommunikationseinheit an dem Transportfahrzeug eingehängt werden kann. Alternativ oder zusätzlich könnte das Verbindungselement durch ein Aufstellelement, beispielsweise einen Fuß, insbesondere einen Gummifuß, ausgebildet sein, so dass die Kommunikationseinheit auf das Transportfahrzeug aufgestellt werden kann. Dies hat den weiteren Vorteil, dass die Position der Kommunikationseinheit auch während des Betriebs einfach geändert werden kann. Durch Änderung der Position kann eine Verbesserung der Datenübertragung erreicht werden.

In weiter vorteilhafter Weise kann die Antenne mindestens ein Fixierungselement, vorzugsweise einen Magnethalter, zur lösbaren Befestigung an dem Transportfahrzeug aufweisen. Dadurch ist es möglich, die Antenne an einer Position an dem Transportfahrzeug, beispielsweise einem SPMT, oder an einer dem Transportfahrzeug zugeordneten Zusatzeinheit, beispielweise einer sog. Power Pack Unit (PPU), anzuordnen, so dass diese gegenüber der Antenne einer weiteren Kommunikationsvorrichtung ausgerichtet ist. Alternativ oder zusätzlich kann die Antenne ein Stativ als Fixierungselement aufweisen. Dies hat den Vorteil, dass die Antenne an dem Fahrzeug fixiert bzw. befestigt werden kann, indem sie auf dem Transportfahrzeug aufgestellt wird. Vorzugsweise kann das Stativ höhenverstellbar ausgebildet sein. Des Weiteren könnte die Antenne über einen Magnethalter und/oder eine form- und/oder kraftschlüssige Verbindung an dem Stativ und somit mittelbar an dem Transportfahrzeug angeordnet werden.

Gemäß einer vorteilhaften Ausgestaltung können die Antenne und die Kommunikationseinheit miteinander kabelverbunden sein. Dabei ist es denkbar und von Vorteil, wenn das Kabel ausreichend lang ausgebildet ist, um die Antenne an unterschiedlichen Positionen an dem Transportfahrzeug festzulegen. Das Kabel könnte beispielsweis eine Länge von mindestens 3 m, insbesondere von mindestens 4 m, vorzugsweise von mindestens 5 m, aufweisen.

In vorteilhafter Weise kann die Antenne als Richtantenne ausgebildet sein. Dies hat den Vorteil, dass eine besonders stabile und zuverlässige Datenverbindung hergestellt werden kann.

In weiter vorteilhafter Weise kann die Kommunikationseinheit ein Daten-Verbindungselement zur Herstellung einer kabelgebundenen Datenverbindung mit dem Transportfahrzeug aufweisen. Dabei ist es denkbar, dass das Verbindungselement als Daten-Steckverbinder oder als eine mit der Kommunikationseinheit verbundene Datenleitung umfassend einen Daten-Steckverbinder ausgebildet ist. Somit wäre es möglich, dass die Datenverbindung entweder durch ein Datenkabel erfolgt, das mit einem entsprechenden Bauteil des Transportfahrzeugs verbunden ist, beispielsweise einer Data-Line-Steckdose, und mit einem Daten-Steckverbinder der Kommunikationseinheit verbunden wird. Alternativ könnte die Kommunikationseinheit bereits ein fest installiertes Datenkabel aufweisen, das mit dem entsprechenden Bauteil des Transportfahrzeugs verbunden wird. Alternativ oder zusätzlich ist denkbar, dass die Kommunikationseinheit dazu ausgebildet ist, drahtlos mit dem Transportfahrzeug Daten auszutauschen.

Gemäß einer vorteilhaften Ausführungsform kann die Kommunikationseinheit ein Versorgungs-Verbindungselement zur Herstellung einer kabelgebundenen Stromversorgung mit dem Transportfahrzeug aufweisen. Dabei könnte das Versorgungs-Verbindungselement beispielsweise als Strom-Steckverbinder oder als eine mit der Kommunikationseinheit verbundene Stromleitung umfassend einen Strom-Steckverbinder ausgebildet sein. Somit wäre es möglich, dass die Stromversorgung entweder durch ein Stromkabel erfolgt, das mit einem entsprechenden Bauteil des Transportfahrzeugs verbunden ist, beispielsweise einer Handlampensteckdose, und mit einem Strom-Steckverbinder der Kommunikationseinheit verbunden wird. Alternativ könnte die Kommunikationseinheit bereits ein fest installiertes Stromkabel aufweisen, das mit dem entsprechenden Bauteil des Transportfahrzeugs verbunden wird. Alternativ oder zusätzlich ist denkbar, dass die Kommunikationseinheit dazu ausgebildet ist, drahtlos von dem Transportfahrzeug mit Energie versorgt zu werden, beispielsweise über elektromagnetische Induktion.

In weiter vorteilhafter Weise kann die Kommunikationseinheit zumindest teilweise, vorzugsweise vollständig, in einem Gehäuse angeordnet sein. Bei dem Gehäuse könnte es sich insbesondere um ein Edelstahl-Gehäuse, beispielsweise ein Edelstahl-Kompaktschaltschrank, handeln. Dies hat den Vorteil, dass die Kommunikationseinheit durch ein robustes Gehäuse geschützt ist und daher auch unter rauen Bedingungen eine zuverlässige Datenverbindung gewährleistet ist. In dieser Weise ist die Kommunikationseinheit zur Verwendung bei unterschiedlichster Witterung geeignet. Hierunter ist insbesondere zu verstehen, dass beispielsweise langanhaltende Sonneneinstrahlung, Regen und/oder Verschmutzung durch äußere Einflüsse wie zum Beispiel Saltzverkrustung, die Funktionsfähigkeit und/oder Bedienbarkeit der Kommunikationseinheit nicht oder nur in kleinem Umfang beeinträchtigen, Weiterhin ist ein robustes Gehäuse dahingehend von Vorteil, dass die Kommunikationseinheit besser gegenüber Schlägen und Stößen, geschützt ist. Insbesondere für den Fall, dass eine oder mehrere Kommunikationseinheiten in einem Verbund von (Schwerlast)Transportfahrzeugen eingesetzt werden, ist die durch das Gehäuse bereitgestellte Robustheit und Witterungsbeständigkeit von besonderer Relevanz.

In besonders vorteilhafter Weise kann die Kommunikationseinheit zur Realisierung mindestens einer der folgenden Funktionen ausgebildet sein:
- ermöglichen einer drahtlosen Datenübertragung von bis zu 65 Mbits/s, insbesondere von bis zu 100Mbit/s,
- ermöglichen einer 128-bit AES-Verschlüsselung (Advanced Encryption Standard),
- ausschließlich Teilnehmer eines definierten Protokolls, beispielsweise ein Process-Field-Network, zur Datenübertragung zuzulassen, die in der gleichen SSID (Service Set Identifier) angemeldet sind
- ermöglichen einer Process-Field-Network-Aktualisierungszeit von 32 ms mit industrial-Point-Coordination-Function (iPCF) zum Verbindungsaufbau innerhalb von weniger als 70 ms nach einer Störung.

Dies hat den Vorteil, dass eine schnelle Übertragung von Dateigrößen, wie sie bei einem Fahrzeugverbund anfallen, auf besonders sichere Weise gewährleistet ist. Dabei ist es denkbar, dass das entsprechende Bauteil der Kommunikationseinheit eine höhere Brutto-Datenrate ermöglicht, beispielsweise eine Brutto-Datenrate von bis zu 300Mbit/s. Durch die drahtgebundene Verbindung kann es jedoch von Vorteil sein, diese auf eine geringere Brutto-Datenrate zu begrenzen, beispielsweise auf 100Mbit/s (Industrial Ethernet). Um eine höhere Robustheit der drahtlosen Datenverbindung zu erreichen, könnte die Datenrate, beispielsweise softwareseitig, auf 65Mbit/s gedrosselt sein.

In vorteilhafter Weise kann die Kommunikationseinheit mindestens eine optische Zustandsanzeige, beispielsweise einen Leuchtmelder, aufweisen. Dies hat den Vorteil, dass ein Benutzer auf einfache Weise über wesentliche Parameter der Kommunikationsvorrichtung informiert ist. Bei diesen Parametern bzw. Betriebszuständen kann es sich um die korrekte Funktion einer externen Spannungsversorgung und/oder die korrekte Funktion eines Not-Halt-Systems und/oder eine erkannte Störung, beispielsweise der Elektronik, und/oder die Signalqualität der Funkverbindung handeln. Alternativ oder zusätzlich kann die Kommunikationseinheit einen Griff aufweisen, wodurch die Handhabung und Positionierung der Kommunikationseinheit, insbesondere mit Arbeitskleidung, beispielsweise Schutzhandschuhen, erleichtert. Ergänzend oder alternativ kann die Kommunikationseinheit ein Schloss, insbesondere zum Abschließen des Gehäuses, aufweisen. Dadurch ist sichergestellt, dass Unbefugten der Zugang zur der Kommunikationseinheit verwehrt ist.

Gemäß einer vorteilhaften Ausgestaltung kann die Kommunikationseinheit dazu ausgebildet sein, mindestens eine der folgenden Daten von dem Transportfahrzeug zu empfangen und/oder mit einer weiteren Kommunikationsvorrichtung auszutauschen:
- Steuerungsdaten
- Bewegungsdaten
- Lastregulierungsdaten
- Niveauregulierungsdaten
- Sicherheitsdaten
- Lageerkennungsdaten.

Bei den Steuerungsdaten kann es sich um Diagnosedaten und/oder um Funktionsdaten, vorzugsweise betreffend die Funktionen beschleunigen, bremsen, und/oder lenken, handeln. Insbesondere kann es sich bei den Diagnosedaten um Soll- und Istzustände von Ventilen handeln, den Strom der durch ein Ventil fließt, einen Reifendruck, eine Fehlerinformation, einen Filterzustand (verschmutzt bzw. sauber), Steuerdaten an sich, d.h. ohne Rückführung, einen Sollwert z. B. für ein Licht oder eine Achsbeleuchtung, und/oder Istwerte von Drücken von einzelnen hydraulischen Einheiten eines Schwerlastfahrzeugs. Alternativ oder zusätzlich ist es denkbar, dass es sich bei den Steuerungsdaten um Ist-Werte einer Regelung und/oder um Stellgrößen einer Regelung handeln kann. Bei den Bewegungsdaten kann es sich beispielsweise um Daten zur Geschwindigkeit, Beschleunigung und/oder Richtung, handeln. Lageerkennungsdaten können die Ausmaße des Transportfahrzeugs, den Ort des Transportfahrzeugs, den Ort weiterer Transportfahrzeuge, insbesondere weiterer im Verbund bewegter Transportfahrzeuge, und/oder Abstände sowie Abstandsänderungen der Transportfahrzeuge zueinander und/oder zu Objekten in der Umgebung umfassen. Generell kann jede Art der voranstehend genannten Daten auch entsprechende Maximal- bzw. Minimalwerte, sowie Warnungen bei Unter- und Überschreiten derselben umfassen. Durch eine entsprechende Ausgestaltung wird es ermöglicht, dass die für den Betrieb der Transportfahrzeuge, insbesondere eines Fahrzeugverbunds, beispielsweise eines Fahrzeugverbunds von Schwerlasttransportfahrzeugen und/oder Schwerlastmodulen, relevanten Daten gesammelt sowie zwischen den Transportfahrzeugen, vorzugsweise drahtlos, ausgetauscht und somit für den Betrieb genutzt werden können. Durch diese Kommunikation könnte eine Synchronisation der Funktionen der Transportfahrzeuge und/oder die Koordination mehrerer Transportfahrzeuge, insbesondere in einem Fahrzeugverbund, bereitgestellt sein.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiels eines erfindungsgemäßen Fahrzeugverbunds umfassend ein erfindungsgemäßes System mit einer erfindungsgemäßen Kommunikationsvorrichtung,
- Fig. 2: in einer schematischen Darstellung eine Seitenansicht der Kommunikationseinheit aus Fig. 1,
- Fig. 3,: in einer schematischen Darstellung eine Frontansicht der Kommunikationseinheit aus Fig. 1, und
- Fig. 4: ein Ablaufdiagramm eines Ausführungsbeispiel eines erfindungsgemäßen Verfahrens.

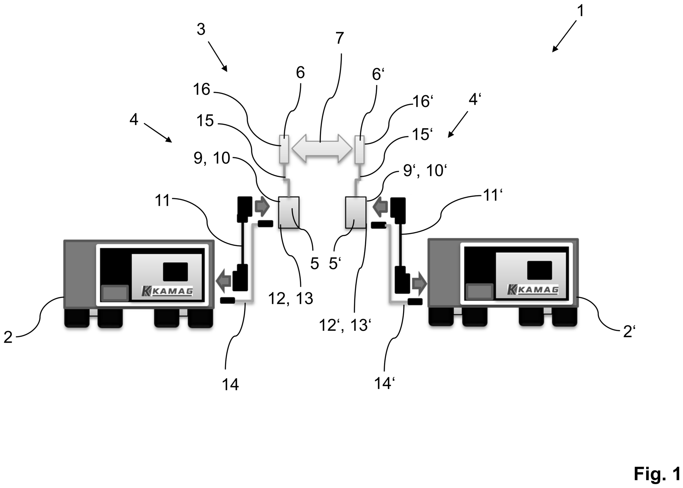

Fig. 1 zeigt einen erfindungsgemäßen Fahrzeugverbund 1, der im vorliegenden Ausführungsbeispiel zwei Transportfahrzeuge 2, 2' aufweist. Die Transportfahrzeuge 2, 2' sind als selbstangetriebene modulare Transportfahrzeuge 2, 2' ausgebildet, wobei die Anzahl und die Art der Transportfahrzeuge 2, 2' auch anders gewählt sein könnte, beispielweise könnte es sich um Industriehubtransporter und/oder Schiffshubtransporter handeln. Des Weiteren ist ein erfindungsgemäßes System 3 zur drahtlosen Datenübertragung zwischen den Transportfahrzeugen 2, 2' dargestellt.

Das System 3 weist zwei erfindungsgemäße Kommunikationsvorrichtungen 4, 4' auf, die Daten drahtlos miteinander austauschen.

Im Folgenden wird eine der Kommunikationsvorrichtungen 4, 4' beschrieben, wobei die Beschreibung identisch für die weitere Kommunikationsvorrichtung 4, 4' gilt. Die Kommunikationsvorrichtung 4, 4' umfasst eine Kommunikationseinheit 5, 5', die mit einer Antenne 6, 6' verbunden ist. Über die Antenne 6, 6' wird eine drahtlose Datenverbindung 7 mit der weiteren Kommunikationsvorrichtung 4, 4' hergestellt.

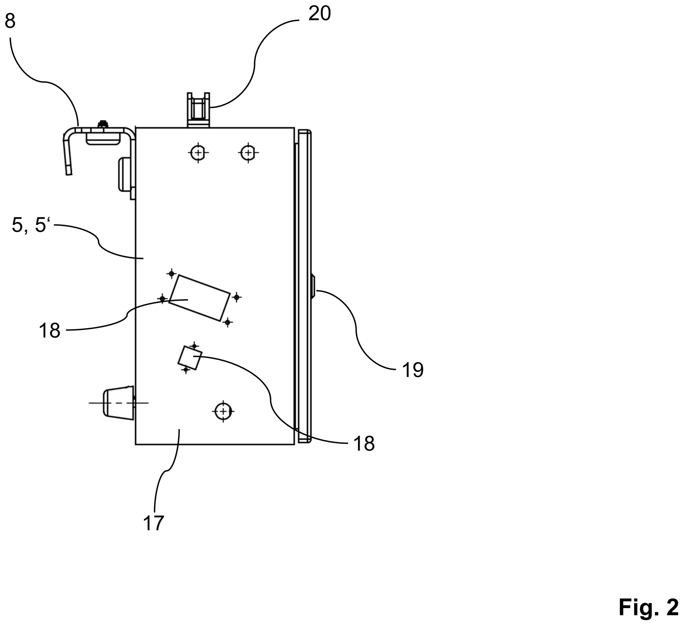

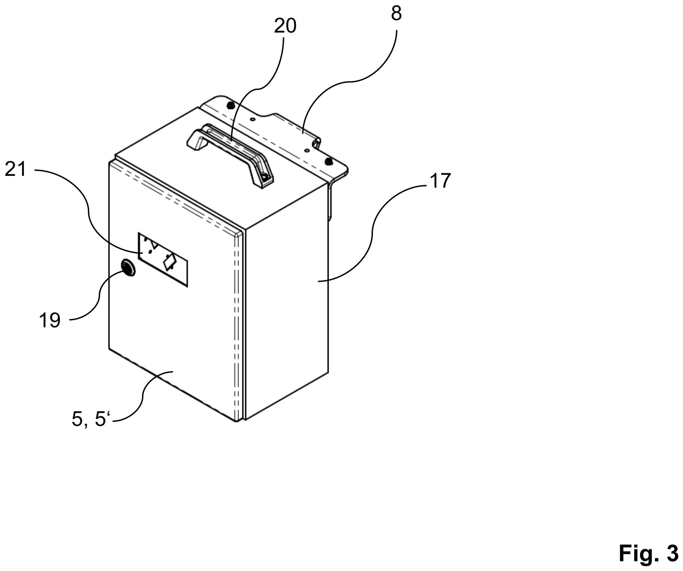

Die Kommunikationseinheit 5, 5', welche in den Fig. 2 und 3 im Detail gezeigt ist, kann über mindestens ein Verbindungselement 8 lösbar an dem Transportfahrzeug 2, 2' direkt oder an einer mit dem Transportfahrzeug 2, 2' verbundenen Zusatzeinheit, beispielsweise einer PPU, angebracht werden. In den Fig. 2 und 3 ist erkennbar, dass das Verbindungselement 8 als Halter bzw. Haken ausgebildet ist, der in eine entsprechende Kontur an dem Transportfahrzeug 1, 1' eingehängt werden kann. Alternativ oder zusätzlich könnte die Kommunikationseinheit 5, 5' auf das Transportfahrzeug aufgestellt, an dieses angeschraubt oder auf eine andere Weise befestigt werden. Die Position kann somit unter Berücksichtigung der Ausgestaltung des jeweiligen Fahrzeugverbunds ausgewählt werden. Fig. 1 zeigt des Weiteren, dass die Kommunikationseinheit 5, 5' ein als Daten-Steckverbinder 9 ausgebildetes Daten-Verbindungselement 10, 10' aufweist, so dass die Kommunikationseinheit 5, 5' über ein Datenkabel 11, 11' mit dem Transportfahrzeug 2, 2' verbunden werden kann. Weiterhin ist an der Kommunikationseinheit 5, 5' ein als Strom-Steckverbinder 12, 12' ausgebildetes Versorgungs-Verbindungselement 13, 13' angeordnet, so dass die Kommunikationseinheit 5, 5' über ein Stromkabel 14, 14' mit dem Transportfahrzeug 2, 2' verbunden werden kann. Das Stromkabel 14, 14' kann über ein korrespondierendes Verbindungselement 15 mit dem Transportfahrzeug 2, 2' verbunden werden, beispielsweise mit einem Handlampenstecker.

Des Weiteren ist die Antenne 6, 6' mit der Kommunikationseinheit 5, 5' über ein Kabel 15, 15' verbunden und weist mindestens eine Fixierungselement 16, 16' auf, beispielsweise einen Magnethalter, so dass die Antenne 6, 6' an unterschiedlichen Positionen an dem Transportfahrzeug 2, 2' befestigt werden kann. Somit ist es möglich, die beiden Antennen 6, 6' des Systems 3 zueinander auszurichten, um eine stabile drahtlose Datenverbindung 7 zu realisieren.

Aus den Fig. 2 und 3 geht des Weiteren hervor, dass die Kommunikationseinheit 5, 5' ein Gehäuse 17 aufweist, das in dem hier gezeigten Ausführungsbeispiel als Schaltschrank ausgebildet ist. An dem Gehäuse 17 sind Ausnehmungen 18 für den Daten-Steckverbinder 9, 9' und den Strom-Steckverbinder 12, 12' vorgesehen. Des Weiteren ist das Gehäuse 17 über ein Schloss 19 abschließbar und ist ein Griff 20 vorgesehen, um die Kommunikationseinheit 5, 5' einfach handhaben zu können. Um einem Benutzer über relevante Parameter der Kommunikationseinheit 5, 5' zu informieren, ist eine Zustandsanzeige 21 in Form eines Kontrollleuchtenmoduls mit acht Kontrollleuchten angeordnet.

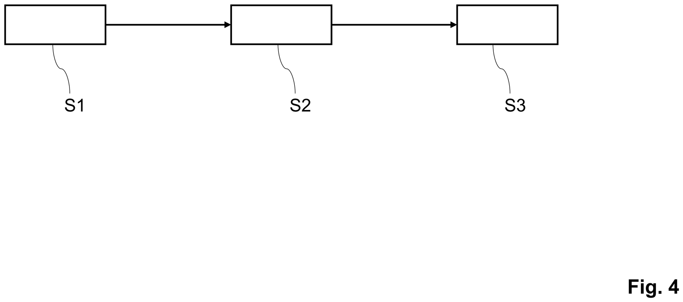

Fig. 4 zeigt ein Ablaufdiagramm eines Ausführungsbeispiel eines erfindungsgemäßen Verfahrens zur drahtlosen Datenübertragung zwischen mindestens zwei Transportfahrzeugen 2, 2' mit einem erfindungsgemäßen System 3. Das System 3 kann beispielsweise gemäß dem in den Fig. 1 bis 3 gezeigten Ausführungsbeispiel ausgebildet sein, so dass hierzu auf die Beschreibung von Fig. 1 bis 3 verwiesen wird.

Dabei wird in einem Schritt S1 eine erste Kommunikationseinheit 5, 5' an einem ersten Transportfahrzeug 2, 2' befestigt und eine drahtgebundene Datenverbindung sowie eine drahtgebundene Stromverbindung zwischen der ersten Kommunikationseinheit 5, 5' und dem ersten Transportfahrzeug 2, 2' hergestellt. In einem Schritt S2 wird eine weitere Kommunikationseinheit 5, 5' an einem weiteren Transportfahrzeug 2, 2' befestigt und eine drahtgebundene Datenverbindung sowie eine drahtgebundene Stromverbindung zwischen der weiteren Kommunikationseinheit 5, 5' und dem weiteren Transportfahrzeug 2, 2' hergestellt. In einem Schritt S3 wird die Antenne 6, 6' der ersten Kommunikationseinheit 5, 5' an dem ersten Transportfahrzeug 2, 2' befestigt und die Antenne 6, 6' der weiteren Kommunikationseinheit 5, 5' an dem weiteren Transportfahrzeug 2, 2' befestigt, wobei die erste Antenne 6, 6' und die zweite Antenne 6, 6' zueinander ausgerichtet sind, um eine drahtlose Datenverbindung 7 zu ermöglichen.

Wesentlich ist dabei, dass die Schritte S1 bis S3 auch in einer beliebigen anderen Reihenfolge durchgeführt werden können.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Fahrzeugverbund
- 2, 2': Transportfahrzeug
- 3: System
- 4, 4': Kommunikationsvorrichtung
- 5, 5': Kommunikationseinheit
- 6, 6': Antenne
- 7: drahtlose Datenverbindung
- 8: Verbindungselement
- 9, 9': Daten-Steckverbinder
- 10, 10': Daten-Verbindungselement
- 11, 11': Datenkabel
- 12, 12': Strom-Steckverbinder
- 13, 13': Versorgungs-Verbindungselement
- 14, 14': Stromkabel
- 15, 15': Kabel
- 16, 16': Fixierungselement
- 17: Gehäuse
- 18: Ausnehmungen
- 19: Schloss
- 20: Griff
- 21: Zustandsanzeige

## Patentansprüche

1. Kommunikationsvorrichtung (4, 4') für ein Transportfahrzeug (2, 2'), insbesondere für ein modulares Transportfahrzeug (2, 2'), vorzugsweise ein selbstangetriebenes modulares Transportfahrzeug (SPMT), ein Industriehubtransporter (IHT) und/oder ein Schiffshubtransporter (SHT) (2, 2'), umfassend eine mit mindestens einer Antenne (6, 6') verbundene Kommunikationseinheit (5, 5'), wobei die Kommunikationseinheit (5, 5') dazu ausgebildet ist, mittels der Antenne (6, 6') eine drahtlose Datenverbindung (7), vorzugsweise über ein lokales Funknetz, mit einer weiteren Kommunikationsvorrichtung (4, 4') eines weiteren Transportfahrzeugs (2, 2') herzustellen.

2. Kommunikationsvorrichtung (4, 4') nach Anspruch 1, **dadurch gekennzeichnet, dass** die Kommunikationseinheit (5, 5') mindestens ein Verbindungselement (8) zur Herstellung einer lösbaren Verbindung mit dem Transportfahrzeug (2, 2') aufweist.

3. Kommunikationsvorrichtung (4, 4') nach Anspruch 1 oder 2, **dadurch gekennzeichnet, dass** die Antenne mindestens ein Fixierungselement (16, 16'), vorzugsweise einen Magnethalter, zur lösbaren Befestigung an dem Transportfahrzeug (2, 2') aufweist.

4. Kommunikationsvorrichtung (4, 4') nach einem der Ansprüche 1 bis 3, **dadurch gekennzeichnet, dass** die Antenne (6, 6') und die Kommunikationseinheit (5, 5') miteinander kabelverbunden sind.

5. Kommunikationsvorrichtung (4, 4') nach einem der Ansprüche 1 bis 4, **dadurch gekennzeichnet, dass** die Antenne (6, 6') als Richtantenne ausgebildet ist.

6. Kommunikationsvorrichtung (4, 4') nach einem der Ansprüche 1 bis 5, **dadurch gekennzeichnet, dass** die Kommunikationseinheit (5, 5') ein Daten-Verbindungselement (10, 10') zur Herstellung einer kabelgebundenen Datenverbindung mit dem Transportfahrzeug (2, 2') aufweist, insbesondere einen Daten-Steckverbinder (9, 9') oder eine mit der Kommunikationseinheit (5, 5') verbundene Datenleitung umfassend einen Daten-Steckverbinder (9, 9').

7. Kommunikationsvorrichtung (4, 4') nach einem der Ansprüche 1 bis 6, **dadurch gekennzeichnet, dass** die Kommunikationseinheit (5, 5') ein Versorgungs-Verbindungselement (13, 13') zur Herstellung einer kabelgebundenen Stromversorgung mit dem Transportfahrzeug (2, 2') aufweist, insbesondere einen Strom-Steckverbinder (12, 12') oder eine mit der Kommunikationseinheit (5, 5') verbundene Stromleitung umfassend einen Strom-Steckverbinder (12, 12').

8. Kommunikationsvorrichtung (4, 4') nach einem der Ansprüche 1 bis 7, **dadurch gekennzeichnet, dass** die Kommunikationseinheit (5, 5') zumindest teilweise, vorzugsweise vollständig, in einem Gehäuse (17) angeordnet ist, insbesondere in einem Edelstahl-Gehäuse, beispielsweise ein Edelstahl-Kompaktschaltschrank.

9. Kommunikationsvorrichtung (4, 4') nach einem der Ansprüche 1 bis 8, **dadurch gekennzeichnet, dass** die Kommunikationseinheit (5, 5') zur Realisierung mindestens einer der folgenden Funktionen ausgebildet ist:
- ermöglichen einer drahtlosen Datenübertragung von bis zu 65 Mbits/s, insbesondere von bis zu 100 Mbits/s,
- ermöglichen einer 128-bit AES-Verschlüsselung (Advanced Encryption Standard),
- ausschließlich Teilnehmer eines definierten Protokolls, beispielsweise ein Process-Field-Network, zur Datenübertragung zuzulassen, die in der gleichen SSID (Service Set Identifier) angemeldet sind
- ermöglichen einer Process-Field-Network-Aktualisierungszeit von 32 ms mit industrial-Point-Coordination-Function (iPCF) zum Verbindungsaufbau innerhalb von weniger als 70 ms nach einer Störung.

10. Kommunikationsvorrichtung (4, 4') nach einem der Ansprüche 1 bis 9, **dadurch gekennzeichnet, dass** die Kommunikationseinheit (5, 5') mindestens eine optische Zustandsanzeige (21), beispielsweise einen Leuchtmelder, aufweist und/oder dass die Kommunikationseinheit (5, 5') ein Verbindungselement (8), insbesondere einen Haken, aufweist und/oder dass die Kommunikationseinheit (5, 5') einen Griff (20) aufweist und/oder dass die Kommunikationseinheit (5, 5') ein Schloss (19), insbesondere zum Abschließen des Gehäuses (17), aufweist.

11. Kommunikationsvorrichtung (4, 4') nach einem der Ansprüche 1 bis 10, **dadurch gekennzeichnet, dass** die Kommunikationseinheit (5, 5') dazu ausgebildet ist, mindestens eine der folgenden Daten von dem Transportfahrzeug zu empfangen und/oder mit einer weiteren Kommunikationsvorrichtung (4, 4') auszutauschen:
- Steuerungsdaten
- Bewegungsdaten
- Lastregulierungsdaten
- Niveauregulierungsdaten
- Sicherheitsdaten
- Lageerkennungsdaten.

12. System (3) zur drahtlosen Datenübertragung zwischen mindestens zwei Transportfahrzeugen (2, 2'), insbesondere modularen Transportfahrzeugen (2, 2'), vorzugsweise selbstangetriebenen modularen Transportfahrzeugen (SPMT) (2, 2'), Industriehubtransportern (IHT) und/oder Schiffshubtransportern (SHT), umfassend mindestens zwei Kommunikationsvorrichtungen (4, 4') nach einem der Ansprüche 1 bis 11, wobei die Kommunikationsvorrichtungen (4, 4') dazu ausgebildet sind, Daten drahtlos miteinander auszutauschen.

13. Fahrzeugverbund (1) mit mindestens zwei Transportfahrzeugen (2, 2'), insbesondere modularen Transportfahrzeugen (2, 2'), vorzugsweise selbstangetriebenen modularen Transportfahrzeugen (SPMT) (2, 2'), Industriehubtransportern (IHT) und/oder Schiffshubtransportern (SHT), und einem System (3) nach Anspruch 12.

14. Verfahren zur drahtlosen Datenübertragung zwischen mindestens zwei Transportfahrzeugen (2, 2'), insbesondere modularen Transportfahrzeugen (2, 2'), vorzugsweise selbstangetriebenen modularen Transportfahrzeugen (SPMT) (2, 2'), Industriehubtransportern (IHT) und/oder Schiffshubtransportern (SHT), mit einem System (3) nach Anspruch 12, umfassend die folgenden Verfahrensschritte:
- Befestigen einer ersten Kommunikationseinheit (5, 5') an einem ersten Transportfahrzeug (2, 2') und Herstellen einer drahtgebundenen Datenverbindung sowie einer drahtgebundenen Stromverbindung zwischen der ersten Kommunikationseinheit (5, 5') und dem ersten Transportfahrzeug (2, 2'),
- Befestigen einer weiteren Kommunikationseinheit (5, 5') an einem weiteren Transportfahrzeug (2, 2') und Herstellen einer drahtgebundenen Datenverbindung sowie einer drahtgebundenen Stromverbindung zwischen der weiteren Kommunikationseinheit (5, 5') und dem weiteren Transportfahrzeug (2, 2'),
- Befestigen der Antenne (6, 6') der ersten Kommunikationseinheit (5, 5') an dem ersten Transportfahrzeug (2, 2') und befestigen der Antenne (6, 6') der weiteren Kommunikationseinheit (5, 5') an dem weiteren Transportfahrzeug (2, 2') derart, dass die erste Antenne (6, 6') und die zweite Antenne (6, 6') zueinander ausgerichtet sind, um eine drahtlose Datenverbindung (7) zu ermöglichen.
